# EUROPEAN PATENT APPLICATION

(11) **EP 1 921 862 A2**
(43) Date of publication of application: **14.05.2008**
(21) Application number: 07118791.8
(22) Date of filing: 18.10.2007
(51) Int. Cl.: H04N 7/26, H04N 7/50, H04N 7/18, G08B 13/196

(54) **Image playback apparatus providing smart search for motion and method of using the same**

(30) Priority: 20.10.2006 KR 20060102513
(71) Applicant: Posdata Co., Ltd., Seongnam-si, Kyeonggi-do 463-050 (KR)
(72) Inventor: You, Gye-Seong, Seoul 135-080 (KR); Han, Kil-Pyo, Gyeonggi-do 448-514 (KR); Kim, Hoon-Kee, Gyeonggi-do 463-747 (KR)
(74) Representative: Viering, Jentschura & Partner

(57) **Abstract**

An image playback apparatus for playing an input image data from at lest one camera includes: an input image encoding unit encoding the input image data and extracting a plurality of motion vectors corresponding to a plurality of frames of the encoded input image data; a storage unit storing the encoded input image data and motion vectors; and a playback unit playing a part of the frames that a motion is detected in a search desire region based on the motion vectors.

## Description

This application claims the benefit of Korean Patent Application No. 2006-0102513, filed on October 20, 2006, which is hereby incorporated by reference in its entirety.

### TECHNICAL FIELD

The present application relates to an image playback apparatus providing a smart search for motion, and more particularly, to an image apparatus searching and playing a playback file corresponding to a motion and a method of searching and playing the playback file corresponding to the motion.

### BACKGROUND

A related art digital video recorder (DVR) system stores images sensed by cameras disposed in various areas to a user and further provides backup images when requested. Accordingly, a user may investigate a crime occurred in a specific area and verify problems through the backup images sensed by the cameras.

In general, however, the images sensed by the cameras are relatively static. While watching a bank safe, for example, images on a static circumference of the bank safe may be sensed for most of sensing time. Accordingly, there exist drawbacks that all the backup images should be investigated for verifying a time when someone approaches the bank safe. As a result, in the related art DVR system, there are problems that a user should waste much time and patience to search for a portion having motion images of the backup images.

### SUMMARY

An image playback apparatus providing a smart search for motion and a method of selectively playing a playback file are described.

An image playback apparatus for playing an input image data from at lest one camera includes: an input image encoding unit encoding the input image data and extracting a plurality of motion vectors corresponding to a plurality of frames of the encoded input image data; a storage unit storing the encoded input image data and motion vectors; and a playback unit playing a part of the frames that a motion is detected in a search desire region based on the motion vectors.

In another aspect, an image playback apparatus includes: an image storage portion storing an encoded image data; a motion vector storage portion storing a plurality of motion vectors corresponding to a plurality of frames of the encoded image data; a motion frame extracting portion extracting a portion of the frames that has a change over a reference value as compared with a previous frame based on the motion vectors; a motion judging portion judging whether a motion is detected in a search desire region of the extracted portion of the frames or not, the motion judging portion selecting a part of the frames that the motion is detected in the search desire region and skipping the other part of the frames that the motion is not detected in the search desire region; and a motion region playback portion playing the selected part of the frames.

In another aspect, a playback method of an image inputted from at least one camera includes steps of: (A-1) playing a playback file; (A-2) determining a search desire region in an image of the played playback file; (A-3) judging whether a motion is detected in the search desire region of a plurality of frames of the playback file or not; and (A-4) displaying a part of the frames that the motion is detected in the search desire region based on a judgment result of the step of (A-3).

In another aspect, a playback method of an image includes steps of: (C-1) storing a plurality of playback files in a storage unit, each playback file including an encoded data by a compression method and a plurality of motion vectors corresponding to a plurality of frames of the encoded data; (C-2) reading out the playback file in the storage unit according to an instruction of file selection and play; (C-3) receiving a search desire region; (C-4) selecting a part of a plurality of frames of the encoded data of the read-out playback file based on the motion vectors of the read-out playback file, wherein a motion is detected in the search desire region of the part of the frames; and (C-5) displaying the of the selected part of the frames.

In another aspect, a computer readable media includes a program to: select and play a playback file; determine a search desire region in an image of the played playback file; judge whether a motion is detected in the search desire region of a plurality of frames of the playback file or not; and display a part of the frames that the motion is detected in the search desire region based on a judgment result.

### BRIEF DESCRIPTION OF THE DRAWINGS

The accompanying drawings, which are included to provide a further understanding of the invention and are incorporated in and constitute a part of this specification, illustrate embodiments of the invention.

FIG. 1 is a view showing a monitoring system using a digital video recorder (DVR) system according to an embodiment of the present invention;

FIG. 2 is a block diagram showing an image playback apparatus according to an embodiment of the present invention;

FIG. 3 is a view showing a structure of a frame of an image data according to an embodiment of the present invention;

FIG. 4 is a view illustrating a method of judging a motion in a present frame as compared with a previous frame according to an embodiment of the present invention; and

FIG. 5 is a flow chart illustrating a method of playing a playback file by judging whether a motion is detected in a search desire region or not according to an embodiment of the present invention.

### DETAILED DESCRIPTION OF THE PREFERRED EMBODIMENTS

Reference will now be made in detail to embodiments which are illustrated in the accompanying drawings. Wherever possible, similar reference numbers will be used to refer to the same or similar parts.

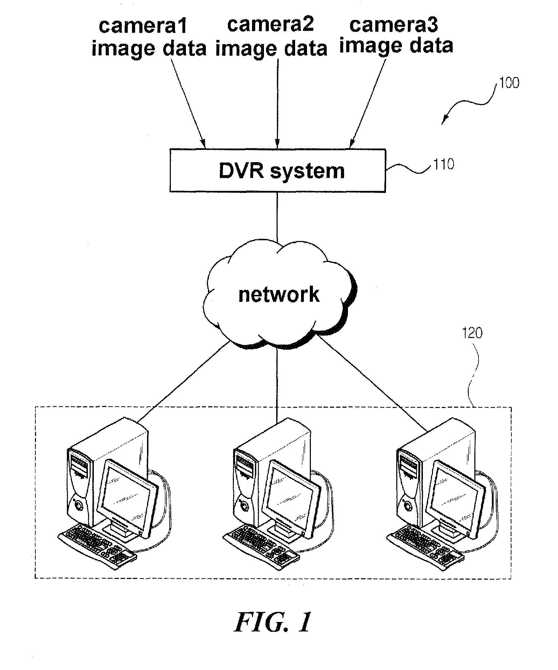

FIG. 1 is a view showing a monitoring system using a digital video recorder (DVR) system according to an embodiment of the present invention. Although a monitoring system using a DVR system is exemplary illustrated in FIG. 1, an apparatus and a method according to the present invention may be applied to a different image playback system in another embodiment.

In FIG. 1, a monitoring system 100 includes at least one camera, a digital video recorder (DVR) system 110 and at least one terminal 120. The at least one camera is coupled with the DVR system 110 through at least one channel (not shown). The at least one terminal 120 such as a computer is remote from and coupled with the DVR system 110 through a network. In the monitoring system 100, an image is sensed by the at least one camera and converted into an image data. The sensed image may be displayed through a closed circuit television (CCTV) for a realtime monitoring and the image data may be stored in the DVR system 110 as a backup data. In addition, the image data in the DVR system 110 may be searched and inspected through the at least one terminal 120. To inspect the image data in the DVR system 110, for example, a user may instruct the DVR system 110 to search and play a requested image data through an input unit such as a keyboard and a mouse of the at least one terminal.

Specifically, a user may search and inspect the image data in the DVR system 110 using an application program in the DVR system 110 by access or an application program executed in the at least one terminal. Although the image data in the DVR system 110 is illustrated as an example in the embodiment of FIG. 1, an image playback apparatus providing a smart search for motion and a method using the apparatus may be applied to all kinds of multimedia data including a video data and an audio data.

The DVR system 110 receives image data from the at least one camera and encodes the image data using a compression method such as a moving picture experts group (MPEG). Further, the DVR system 110 generates a playback file including the encoded image data and a motion vector corresponding to each frame of the encoded image data, and the playback file is stored in a storage unit such as a file system. When a first frame of the image data is changed into a second frame next to the first frame, a motion vector is defined by data regarding the changes between first and second frames in image data. For example, the DVR system 110 may determine one of sequential frames of the image data as an original data frame, i.e., an intra (I) frame, and may determine the others of the sequential frames including the data regarding the changes in the image data as a plurality of predicted (P) frames. Accordingly, the I frame and the plurality of P frames may be stored in the storage unit together with the motion vectors corresponding to the plurality of P frames. Each of the plurality of P frames includes data regarding changes as compared with the I frame or the other one of the plurality of P frames.

When an instruction of selection and play is inputted by a user, the DVR system 110 reads out and plays selected ones of the playback files in the storage unit. Further, a user may select a region for detecting a motion in the images of the playback files as a search desire region. When the search desire region is selected, the DVR system 110 judges whether there a motion is detected in the search desire region based on the motion vectors of the read-out playback files, and selectively plays the frames that a motion is detected in the search desire region of the read-out playback files. As a result, according to the user's instruction of selection and play of the playback file, the DVR system 110 extracts frames that include data changes over a reference value with respect to the I frame based on the motion vectors of the read-out playback file and judges whether each extracted frame has a motion in the search desire region. Finally, the DVR system 110 plays the playback file by selecting a part of the frames that the motion is detected and by skipping over the other part of the frames that the motion is not detected.

In an embodiment of the present invention, the playback file generated in the DVR system 110 may be stored in an exterior storage unit such as a hard disk as well as in an interior storage unit of the DVR system 110.

Therefore, in the monitoring system 100 according to the present invention, when a playback file corresponding to images in a region having a restricted motion such as a circumference of a bank safe or an automated teller machine (ATM) and a security zone is played, a user may easily and promptly move to a desired playback position by detecting a specific region, i.e., the search desire region of the frame. In addition, since the frames classified into the I frame and the plurality of P frames are stored, a size of the playback file is reduced.

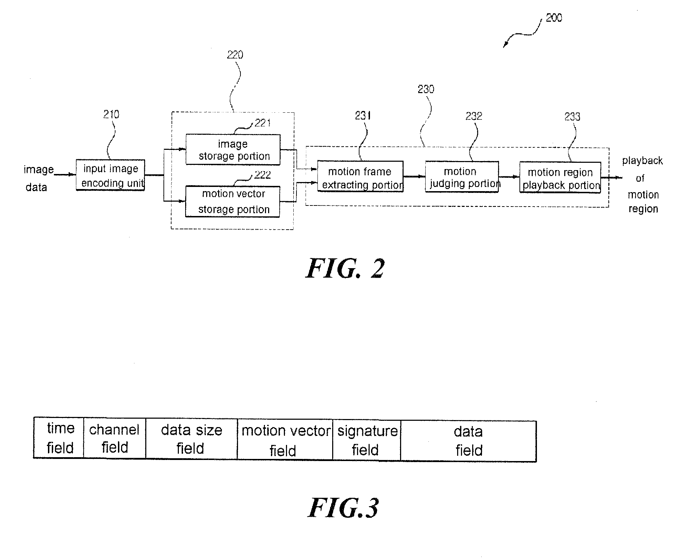

FIG. 2 is a block diagram showing an image playback apparatus according to an embodiment of the present invention. The image playback apparatus 200 may be included in the DVR system 110 of FIG. 1.

In FIG. 2, the image playback apparatus 200 includes an input image encoding unit 210, a storage unit 220 and a playback unit 230. The input image encoding unit 210 receives and encodes an input image data. In addition, the input image encoding unit 210 extracts motion vectors corresponding to a plurality of frames of the encoded input image data and generates a playback file including the encoded input image data and the motion vector. Accordingly, the input image encoding unit 210 repeatedly encodes the sequential frames of the input image data into an I frame as an original data frame and a plurality of P frames including data regarding changes in the input image data as compared with a previous frame using a compression method such as an MPEG.

The motion vector is defined by a value corresponding to a motion in images of the present frame and the previous frame. In a compression method such as an MPEG, for example, a motion in images of adjacent frames may be converted into the motion vector of a digital value through an image analysis algorithm. Accordingly, the encoded input image data of the playback file may be classified into the I frame as an original image and the plurality of P frames as variable images. The number of I frames in the encoded input image data may be determined according to a frame per second (FPS) value that a user have established in advance. For example, the input image data may be encoded to have 1, 2, 3, 4, 5, 6, ... to 6 frames per second as the number of the I frames.

At least one playback file including the encoded input image data and the motion vectors and generated in the input image encoding unit 210 is stored in the storage unit 220, and the corresponding playback file in the storage unit 220 is read out according to a user's instruction of selection and play of the playback file. Further, the storage unit 220 may include an image storage portion 221 and a motion vector storage portion 222. The encoded input image data is stored in the image storage portion 221, and the motion vector according to the encoded input image data is stored in the motion vector storage portion 222. A mass storage unit such as a hard disk, a flash memory and a magnetic tape may be used as the storage unit 220 storing the encoded input image data and the motion vector of the playback file.

The playback unit 230 selectively plays the playback file having the encoded input image data corresponding to a part of the frames that a motion is detected in the search desire region based on the motion vectors of the read-out playback files. The search desire region is inputted by a user and may be determined as a specific region for search in the frame, i.e., a region of concern. When a user does not input the search desire region, all regions of the frame may be sequentially searched as default. Here, there exists an advantage that changes of a motion in each frame are precisely searched and inspected.

The playback unit 230 may include a motion frame extracting portion 231, a motion judging portion 232 and a motion region playback portion 233. The motion frame extracting portion 231 read out the motion vector corresponding to the playback file in the motion vector storage unit 222 and extracts a portion of the frames that includes changes of the input image data over a reference value with respect to a previous frame based on the motion vector of the read-out playback file. Accordingly, the motion frame extracting portion 231 extracts the frame where the motion vector is not zero or the frame where the motion vector has changes as compared with the I frame or one of the plurality of P frames.

The motion judging portion 232 receives the search desire region selected by a user and judges whether a motion is detected in the search desire region of each frame extracted by the motion frame extracting portion 231 or not. Further, the motion judging portion 232 selects the part of the frames that the motion is detected in the search desire region and skips the other part of the frames that the motion is not detected in the search desire region. As a result, the motion judging portion 232 selects only the part of the frames that a motion is detected in the search desire region of the playback file. Therefore, the motion judging portion 232 judges that a motion is detected in the search desire region of the portion of the frames extracted by the motion frame extracting portion 231 when the average difference of data in the search desire region between the extracted frame and the previous frame is over a predetermined critical value, and outputs the part of the frames judged that a motion is detected in the search desire region for playing.

The motion region playback portion 233 may play the playback file of the part of the frames that a motion is detected and next a few playback files of subsequent frames. Accordingly, a user may easily and promptly move to a desired playback position where a motion is detected when playing images in a region having a restricted motion such as a safe, a security zone or an automated teller machine (ATM).

FIG. 3 is a view showing a structure of a frame of an image data according to an embodiment of the present invention.

In FIG. 3, a frame for a playback file includes a time field, a channel field, a data size field, a motion vector field, a signature field and a data field. Different information is stored in each of the time field, the channel field, the data size field, the motion vector field, the signature field and the data field. The time field includes information of time at which the image is sensed by the at least one camera, and the channel field includes information of the at least one camera sensing the image or information of identification by which a region where the image is sensed is discriminated. For example, the information of identification of region may be a number of communication port that connects the at least one camera and the image playback apparatus 200 (of FIG. 2). In addition, the data size field includes a size of the frame, and the motion vector field includes a motion vector corresponding to the frame. Further, the signature field includes a digital signature for certification of data usage, and the data field includes the image data sensed by the at least one camera.

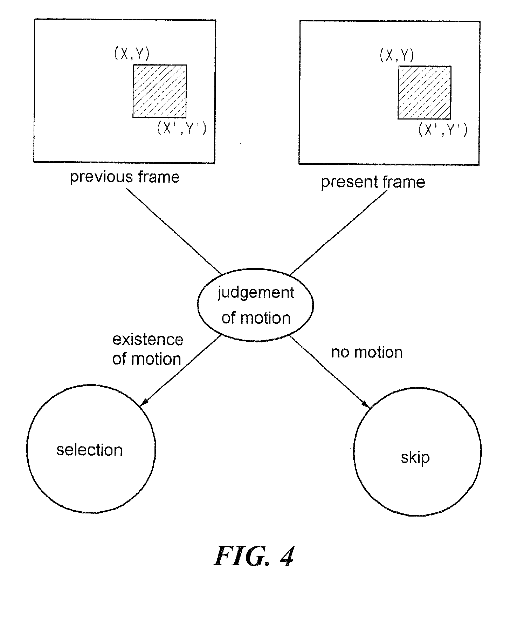

FIG. 4 is a view illustrating a method of judging a motion in a present frame as compared with a previous frame according to an embodiment of the present invention.

In FIG. 4, the image playback apparatus 200 (of FIG. 2) judges a motion by comparing the present frame with the previous frame. The previous frame may be one of the I frame and the P frame encoded by the input image encoding unit 210 (of FIG. 2). The I frame is an original data frame of sequential frames of the input image data, and the P frame includes data regarding the changes as compared with the I frame or the other P frames.

A rectangular region may be defined by two points having coordinates (X, Y) and (X', Y') in the previous frame. When the data corresponding to the rectangular region of the present frame is not changed or the data is changed within a range corresponding to a critical value, it is judged that a motion is not detected in the rectangular region of the present frame and then a next frame is compared with the previous frame. In addition, when the data corresponding to the rectangular region of the present frame is changed out of the range corresponding to the critical value, it is judged that a motion is detected in the rectangular region of the present frame. As a result, the image playback apparatus 200 selects only a part of the frames that a motion is detected and skips over the other part of the frames that a motion is not detected, and the selected part of the frames may be outputted through a display device.

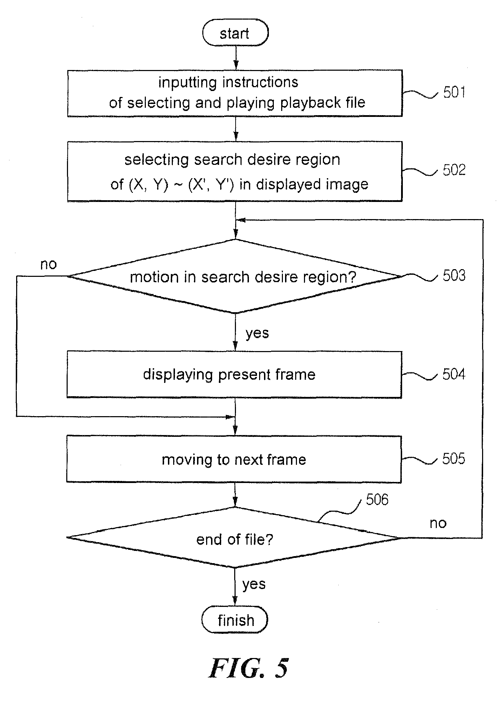

FIG. 5 is a flow chart illustrating a method of playing a playback file by judging whether a motion is detected in a search desire region or not according to an embodiment of the present invention.

Before a playback file is played in FIG. 5, an image playback apparatus 200 receives an input image data from at least one camera and encodes the received input image data. For example, the image playback apparatus 200 may repeatedly encode the sequential frames of the input image data into an I frame as an original data frame and a plurality of P frames including data regarding sequential changes in the input image data as compared with a previous frame using a compression method such as MPEG. In addition, the input image playback apparatus 200 generates a motion vector corresponding to the sequential changes in the input image data of each frame. As a result, the input image playback apparatus 200 estimates the motion vector corresponding to each frame and generates a playback file including the encoded input image data and the corresponding motion vector. The playback file is stored in a storage unit such as a hard disk.

In a first step 501 of FIG. 5, instructions of selecting a playback file stored in the storage unit and playing the selected playback file are inputted by a user. According to the instructions, the image playback apparatus 200 reads out and plays the playback file in the storage unit.

A user may further select a search desire region for detecting a motion in a displayed image by the playback file. In a second step 502 of FIG. 5, the search desire region is inputted to the image playback apparatus 200 by a user. For example, the search desire region may be represented by two points having coordinates (X, Y) and (X', Y') in the displayed image by a display device. Further, the image playback apparatus 200 may drive application programs for playing the playback file or designating the two points.

In a third step 503 of FIG. 5, the image playback apparatus 200 judges whether a motion is detected in the search desire region of frames of the playback file. Accordingly, the data corresponding to the search desire region of the present frame is compared with the data corresponding to the search desire region of the previous frame. For example, when a difference of the data corresponding to the search desire region between the present frame and the previous frame is greater than a critical value, it may be judged that a motion is detected in the search desire region of the present frame. In addition, when the difference of the data corresponding to the search desire region between the present frame and the previous frame is less than the critical value, is may be judged that a motion is not detected in the search desire region of the present frame and the present frame may be skipped. Sequentially, the image playback apparatus 200 judges detection of a motion in a subsequent frame. The previous frame may be one of the I frame and the P frame of the input image data. The I frame is an original data frame of sequential frames of the input image data, and the P frame is one of the sequential frames and includes data regarding the changes as compared with the I frame or the other P frame.

In a fourth step 504 of FIG. 5, accordingly, the image playback apparatus 200 extracts and displays the frames having data changes corresponding to the search desire region over a critical value as compared with the previous frame.

Further, in a fifth step 505 of FIG. 5, the image playback apparatus 200 skips the frames having data changes corresponding to the search desire region less than the critical value as compared with the previous frame, and moves to the subsequent frame to judge whether a motion is detected in the search desire region or not.

In a sixth step 506 of FIG. 6, when the image playback apparatus 200 moves to the subsequent frame, the image playback apparatus 200 judges whether the subsequent frame is an end frame of the playback file or not by verifying a end of file (EOF) bit of the subsequent frame. When the subsequent frame is not the end frame of the playback file, the third step 503 is performed again and the image playback apparatus judges whether a motion is detected in the search desire region of the subsequent frame or not.

Therefore, an image playback apparatus providing a smart search for a motion according to the present invention easily and promptly moves to a playback position where a motion is detected and plays a playback file corresponding to the playback position when images in a region having a restricted motion such as a circumference of a bank safe or an automated teller machine (ATM) and a security zone is played.

Further, in an image playback apparatus and an image playback method providing a smart search for a motion according to the present invention, when a playback file for images are played, a user easily and promptly moves to a playback position where a motion is detected by analyzing changes between frames. Moreover, an image playback apparatus and an image playback method providing a smart search for a motion according to the present invention is applied to a DVR system, thereby images having a motion comfortably searched and inspected when images in a region having a restricted motion such as a circumference of a bank safe or an automated teller machine (ATM) and a security zone is played.

Embodiments of the present invention may include computer readable media including program instructions to implement various operations embodied by a computer. The media may also include, alone or in combination with the program instructions, data files, data structures, and the like. The media may be those specially designed and constructed for the purposes of the present invention, or may be of the kind well known and available to those skilled in the computer software arts. Examples of computer readable media include magnetic media such as hard disks, floppy disks, and magnetic tape; optical media such as CD-ROM (compact disk-read only memory) disks and DVD (digital video disk); magneto-optical media such as floptical disks; and hardware units that are specially configured to store and perform program instructions, such as read only memory (ROM), random access memory (RAM), flash memory, and the like. Examples of program instructions include both machine code, such as produced by a compiler, and advanced language code that may be executed by the computer using an interpreter.

It will be apparent to those skilled in the art that various modifications and variations can be made in an image playback apparatus providing a smart search for a motion and a method of using the same of the present invention without departing from the spirit or scope of the invention. Thus, it is intended that the present invention cover the modifications and variations of this invention provided they come within the scope of the appended claims and their equivalents.

## Claims

1. An image playback apparatus for playing an input image data from at lest one camera, comprising:
an input image encoding unit encoding the input image data and extracting a plurality of motion vectors corresponding to a plurality of frames of the encoded input image data; a storage unit storing the encoded input image data and motion vectors; and
a playback unit playing a part of the frames that a motion is detected in a search desire region based on the motion vectors.

2. The apparatus according to claim 1, wherein sequential frames of the input image data includes a first frame and a second frame next to the first frame, and the motion vector is defined by a data regarding a change of the second frame as compared with the first frame.

3. The apparatus according to claim 2, wherein the frames include a plurality of intra (I) frames each as an original frame of the sequential frames, and a number of the I frames is determined according to a predetermined frame per second (FPS) value.

4. The apparatus according to claim 1, wherein the storage unit stores the encoded input image data and the motion vectors as a playback file, and wherein the storage unit comprises:
an image storage portion storing the encoded input image data; and
a motion vector storage portion storing the motion vectors.

5. The apparatus according to claim 1, wherein the playback unit comprises:
a motion frame extracting portion extracting a portion of the frames that has a change over a reference value as compared with a previous frame based on the motion vectors;
a motion judging portion judging whether the motion is detected in the search desire region of the extracted portion of the frames or not, the motion judging portion selecting the part of the frames that the motion is detected in the search desire region and skipping the other part of the frames that the motion is not detected in the search desire region; and a motion region playback portion playing the selected part of the frames.

6. The apparatus according to claim 5, wherein the motion judging portion judges that the motion is detected in the extracted portion of the frame when a data difference by comparing the search desire region of the extracted frame and the search desire region of the previous frame is greater than a predetermined critical value.

7. The apparatus according to claim 5, wherein the previous frame and the extracted part of the frames are one of an intra (I) frame and a plurality of predicted (P) frames encoded by the input image encoding unit, and wherein the I frame is an original data frame of the input image data, and each P frame includes a data regarding the change as compared with one of the I frame and the other P frames.

8. An image playback apparatus, comprising:
an image storage portion storing an encoded image data;
a motion vector storage portion storing a plurality of motion vectors corresponding to a plurality of frames of the encoded image data; a motion frame extracting portion extracting a portion of the frames that has a change over a reference value as compared with a previous frame based on the motion vectors;
a motion judging portion judging whether a motion is detected in a search desire region of the extracted portion of the frames or not, the motion judging portion selecting a part of the frames that the motion is detected in the search desire region and skipping the other part of the frames that the motion is not detected in the search desire region; and a motion region playback portion playing the selected part of the frames.

9. The apparatus according to claim 8, further comprising an input image encoding unit generating the encoded image data by repeatedly encoding sequential frames of an input image data into an intra (I) frame as an original data frame and a plurality of predicted (P) frames each including a data regarding sequential changes as compared with a previous frame, and generating a plurality of motion vectors corresponding to the sequential changes.

10. A playback method of an image inputted from at least one camera, comprising steps of:
(A-1) playing a playback file;
(A-2) determining a search desire region in an image of the played playback file;
(A-3) judging whether a motion is detected in the search desire region of a plurality of frames of the playback file or not; and
(A-4) displaying a part of the frames that the motion is detected in the search desire region based on a judgment result of the step of (A-3).

11. The playback method according to claim 10, wherein the playback file includes an image data and a plurality of motion vectors corresponding to the frames of the image data, and wherein the step of (A-3) comprises:
(B-1) extracting a portion of the frames that has a change over a reference value as compared with a previous frame based on the motion vectors;
(B-2) judging whether the motion is detected in the search desire region of the extracted portion of the frames or not; and
(B-3) selecting the part of the frames that the motion is detected in the search desire region and skipping the other part of the frames that the motion is not detected in the search desire region based on a judgment result of the step of (B-3).

12. The playback method according to claim 10, wherein the step of (A-3) includes judging that the motion is detected in the frame when a data difference by comparing the search desire region of the frame and the search desire region of the previous frame is greater than a predetermined critical value.

13. A playback method of an image, comprising steps of:
(C-1) storing a plurality of playback files in a storage unit, each playback file including an encoded data by a compression method and a plurality of motion vectors corresponding to a plurality of frames of the encoded data;
(C-2) reading out the playback file in the storage unit according to an instruction of file selection and play;
(C-3) receiving a search desire region;
(C-4) selecting a part of a plurality of frames of the encoded data of the read-out playback file based on the motion vectors of the read-out playback file, wherein a motion is detected in the search desire region of the part of the frames; and
(C-5) displaying the of the selected part of the frames.

14. The playback method according to claim 13, before the step of (C-1), further comprising a step of (C-6) generating the encoded data by using an input image data, and checking the motion vectors corresponding to the frames of the encoded data.

15. The playback method according to claim 14, wherein in the step of (C-6), sequential frames of the input image data are repeatedly encoded into an intra (I) frame as an original data frame and a plurality of predicted (P) frames each including a data regarding sequential changes as compared with a previous frame, and the motion vectors corresponding to the sequential changes.

16. The playback method according to claim 13, wherein the step of (C-4) comprises:
(D-1) extracting a portion of the frames that has a change over a reference value as compared with a previous frame based on the motion vectors;
(D-2) judging whether that a motion is detected in the search desire region of the extracted portion of the frames or not; and
(D-3) selecting the part of the frames that the motion is detected in the search desire region and skipping the other part of the frames that the motion is not detected in the search desire region based on a judgment result of the step of (D-2).

17. The playback method according to claim 16, wherein the step of (D-2) includes judging that the motion is detected when a data difference by comparing the search desire region of the extracted frame and the search desire region of the previous frame is greater than a predetermined critical value.

18. The playback method according to claim 17, wherein the previous frame and the extracted portion of the frames are one of an intra (I) frame and a plurality of predicted (P) frames by encode, and wherein the I frame is an original data frame of the input image data, and each P frame includes a data regarding the change as compared with one of the I frame and the other P frames.

19. A computer readable media comprising a program to: select and play a playback file; determine a search desire region in an image of the played playback file; judge whether a motion is detected in the search desire region of a plurality of frames of the playback file or not; and display a part of the frames that the motion is detected in the search desire region based on a judgment result.
